# EUROPEAN PATENT APPLICATION

(11) **EP 2 942 916 A1**
(43) Date of publication of application: **11.11.2015**
(21) Application number: 14167163.6
(22) Date of filing: 06.05.2014
(51) Int. Cl.: H04L 12/851, H04L 12/875, H04L 12/947

(54) **Contention avoidance in packet switched network equipments**

(71) Applicant: ALCATEL LUCENT, 92100 Boulogne-Billancourt (FR)
(72) Inventor: Leclerc, Brice, 91620 Nozay (FR); Marce, Olivier, 91620 Nozay (FR)
(74) Representative: Camus, Olivier Jean-Claude

(57) **Abstract**

In a node of a communication network comprising an interface to forward datagrams, a method to forward a datagram (5) belonging to a coherent emission from a source, when a date (7) arises, comprising the following steps:
- reserving (6) the interface for the date (7), before the date (7) arises,
- forwarding the datagram (5) via the reserved interface, when the date arises.

## Description

### Field of the invention

The invention concerns the domain of communication networks. More specifically, the invention concerns packet switched network equipments which transmit information over a communication network, in atomic units called packets or datagrams.

A "coherent emission" or "chained emission" of datagrams by a source, is intended below to mean an emission of a set of datagrams for which the time and date of emission of each datagram in the set is fixed or deterministic relatively to the other datagrams in the set.

To the end of the present application, the following definitions also apply:
"Date" means a time delay from a time origin, such date being determined at a given degree of accuracy or precision, compatible with the prevision of the arrival of datagrams or packets at a node of a telecommunication or communication network. As such, the words "date" or "time and date" or "point in time" or "interval of time relatively to an origin" are intended to be equivalent.
"Processor configured to compute the date" means all means for computing a date at different degrees of accuracy and more peculiarly is intended to be equivalent to a circuit for computing the date, a device such as a clock, or counter for computing the date or count up/down a known interval starting from the reception of a datagram from a given source.

### Background

There have been historically at least two types of communication over a communication network: circuit switching and packet switching.

A circuit is an element of communication network which has a null added value of latency, in the communication of a signal, to the value of latency imposed by the fundamental limit of the celerity of electromagnetical waves used to carry on the signal via the circuit.

A problem of a packet switched network is latency, which is the time needed to transmit a datagram from a sender to a receiver via the network. Latency prevents to transmit at the speed of the underlying technology and is for instance incompatible with interactive or real-time applications, video conference, massive computation application, remote control, wireless CoMP technologies or fast data mobility required by data centers.

In the art prior to the invention it is considered in packet switched networks that the latency can only be decreased to the price of an increase of the bandwidth of the links joining the nodes of the network.

Hence, the art prior to the invention cannot easily foresee reducing the value of latency for a packet switched network while maintaining a constant bandwidth.

As a result, to obtain a packet switched network with the latency approaching the one of a switched circuit network appears to be a difficult problem in the art prior to the invention.

### Summary

In this context, the invention concerns a node for a packet switched communication network comprising an interface to forward a datagram belonging to a coherent emission from a source, when a date arises, and a processor configured to compute the date according to the date of arrival of the datagram from the source, before the arrival of the datagram.

In variants
- the interface is a circuit.
- the interface is a memory.
- the interface is a processing unit.

The invention concerns also:
A first method, in a node for a packet switched communication network, to forward a given datagram, belonging to a coherent emission from a source, when a date arises, comprising the following steps:
   - reserving an interface of the node for the date, before the date arises,
   - forwarding the given datagram via the reserved interface, when the date arises.
A second method, in a node for a packet switched communication network, to forward a given datagram belonging to a coherent emission from a source, when a date arises, comprising the following steps:
   - freeing an interface of the node when the date arises,
   - forwarding the given datagram via the freed interface, when the date arises.

In variants of the first method:
- it comprises a step of detection of a coherent emission of datagrams, from the source.
- the step of detection of a coherent emission of datagrams from the source is a step of detection of a periodical emission of datagrams from the source.
- the step of detection of a coherent emission of datagrams from the source is a step of detection of an emission of tagged datagrams from the source.
- reserving or freeing is performed in response to detection, by the node, of a coherent emission of datagrams, from the source.
- the first method is used to forward datagrams with a deterministic latency.
- the deterministic latency is equal to the latency of the not loaded node.
- the given datagram is memorized and in parallel forwarded via the interface.
- a header is prepared for the given datagram, said header is sent before the date, and said header is followed by the given datagram.
- fragmentation and aggregation in the node are managed to maintain the emission as a coherent emission.
- the interface is reserved for the date with an additional time guard, around the date.
- the first method is used to avoid congestion or contention via said interface, when the date arises.
- the first method is used to avoid latency via said interface, when the date arises.
- the first method is used to avoid latency between an emitter and a receiver of a packet switched communication network.

### List of figures

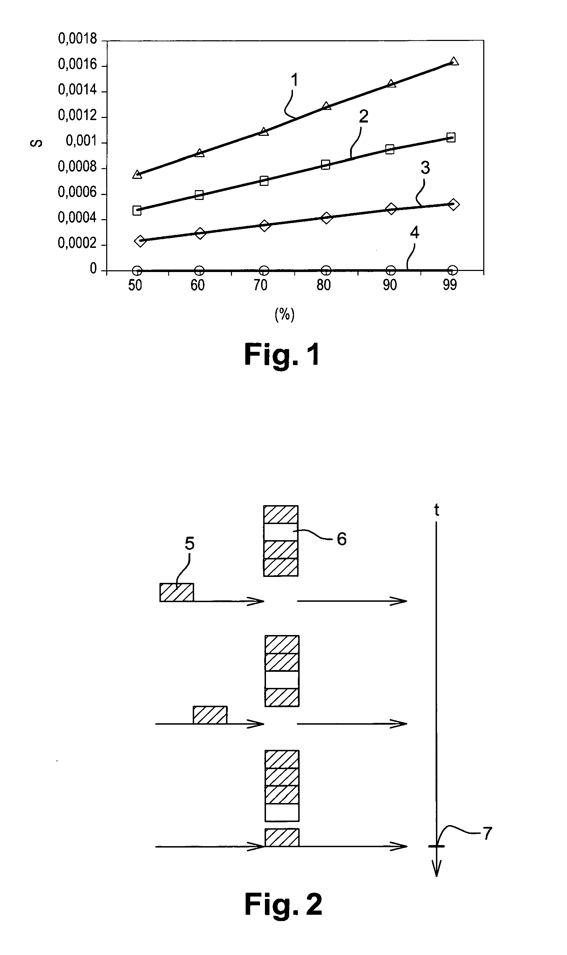

The invention will be better understood in relationship with the figures 1 and 2 for the reference numbers between parenthesis in which:
- Figure 1 describes the Expedited Forwarding flow aggregation impact on contention delay with Priority Queuing as a graph showing contention increase (vertical axis) as a function of link load for a mix of Expedited forwarding (EF) and Best effort (BE) flows on the one hand and with the Periodic Forwarding (PF)(4) of the invention on the other hand. The distribution of the flows between EF and BE varies from 30% EF + 70% BE (1) to, 20% EF + 80% BE (2) and 10% EF + 90% BE (3).
- Figure 2 describes Output queue time slot reservation for a PF packet (5) with the invention in which a slot (6) is reserved in advance in an output queue for a date(7) on time axis (t).
- Figure 3 describes an embodiment of an apparatus according to the invention.
- Figure 4 describes another embodiment of an apparatus according to the invention

### List of embodiments

In reference to figure 1, it can be shown, for a node according to the invention, on a graph representing the contention delay in seconds (s) on a vertical axis and the percentage of load of a node of a communication network in percent (%), that the latency curve with the invention (4) with periodic or coherent forwarding of packets (PF) is inferior to the different mix of Expedited forwarding (EF) and Best effort (BE) for 30% EF + 70% BE (1), 20% EF + 80% BE (2), 10% EF + 90% BE (3). This is because such node is programmed to avoid contention or congestion instead of curing its effects.

In reference to figure 2, it can be shown, for a node according to the invention, in the general case of an output queue, the flow chart of the method for the invention. According to the method, a slot(6) is reserved in an output queue of the node for making the queue and interface of the node free at a given date (7) on the time axis (t) at which a given datagram (5) is expected to arrive. As a result, the given datagram (5) arrives at the interface and queue at the given date (7) when the slot (6) is available and is forwarded immediately without the given datagram being queued.

The invention will also be better understood in relationship with the following embodiments which are not intended to be limitative.

The network equipment manufacturers have focused on the increase of bandwidth as a response to the increase of traffic. Bandwidth has been multiplied by 1000 on access, wireless and core network in 15 years.

Latency did not follow the same improvement. As a consequence throughput of TCP connection is today more limited by latency than by lack of bandwidth. Moreover the services that are more sensitive to latency than to the throughput (interactive services, remote control, high frequency computing) have limited deployment or could grow up with more delay efficient networks.

End system based solutions are relatively easy and inexpensive to deploy unlike network based solutions. They can reduce latency for off line data like media delivery, but they are not suitable for time sensitive services. It is then needed to have low latency network equipments.

Products with a low latency capability, both in access and core network, able to provide low delay end to end delivery are of high interest.

When it comes to wireless technology, it appears that collaborative MIMO or CoMP require latency less than 1 ms. Ad-hoc solutions where the collaborating base stations are point-to-point connected by fiber are not suitable for a large scale deployment. This would require having fiber installed between all pair of nodes. Moreover this prevents any evolution in the network topology. It is then needed to have a network between collaborating base stations that will provide the necessary flexibility. Such network should be based on IP with a limited number of intermediate nodes between stations (routers or switches). Even with few such nodes, a few milliseconds latency is challenging. The distance between nodes being limited to tenths of kilometers at most, the main limiting factor is not the light speed limit. Moreover, even if still under definition, it is targeted that future 5G networks will offer 100x the today capacity and a latency lesser or equal to 1ms. Facing to the latency issue is one of the key for designing a successful 5G system and such goal cannot be reached with actual network architecture.

A disruptive approach is needed; access to the medium and intermediate buffering are to be addressed.

The technical challenge that has to be solved is to reduce latency in packet network to the lowest possible value.

Latency causes are multiple and arise at all the OSI layers. At Layer 1, the latency is caused by speed light, depending on the medium and is a physical limit. The latency created at all the other layers can be reduced or removed as they are caused by processing.

Latency is a fundamental property of a packet-switched network and is a consequence of collision avoidance or collision repair. Most of the methods to manage collisions and buffering react to congestion or contention rather than avoiding it:
**Differentiated Services "Expedited Forwarding"** [RFC 3246]
   DiffServ "Expedited Forwarding" (EF) is intended to provide low delay, low jitter and low loss of services by ensuring that the EF aggregate is served at a certain configured rate.
   Drawback: does not prevent congestion and then does not prevent a given packet from being delayed. An "Expedited Forwarding" packet is stored before being forwarded in case the device already contains "Expedited Forwarding" packets awaiting service (Figure 1).
   Morever the low loss feature of this per-hop-behavior is too stringent. Interactive services do not need the same tradeoff between reliability and latency as in case of interactive services delayed datagrams can be discarded as useless.
**Explicit Congestion Notification** (ECN)
   Explicit Congestion Notification (ECN) protocol [RFC 3168] avoids that transport/application suffer losses to discover congestion. Large deployment of ECN would directly improve active queue management (AQM) performance.
   Drawback: one of the promising directions for reducing latency would be to enhance ECN toward an earlier congestion detection system, instead of waiting for drop decision as done in RFC 3168.
**802.1Qav (Audio-video bridging) & 802.1Qat (Admission controls)**
   Reliably deliver data with a deterministic low latency and low jitter.
   Drawback: bandwidth reservation ensures deterministic average latency but not minimal latency as it does not prevent congestion on an output port at the time a datagram arrives.
   Moreover the low loss feature of this service is too stringent. Interactive services do not need the same tradeoff between reliability and latency as in case of interactive services delayed datagrams can be discarded as useless.
**Pseudo Wire Emulation** [RFC 3985]
   Pseudo Wire Emulation emulates the essential attributes of a telecommunications service over a Packet Switched Network. Pseudo Wire Emulation is intended to provide the minimum necessary functionality to emulate the wire with the required degree of faithfulness for the given service definition.
   Drawback: timed delivery keeps a constant phase between input and output interfaces for non-contiguous packets then is reduces jitter but does not manage minimal latency.
**Cut-through switching**
   Cut-through switching technique forwards a datagram before the whole datagram has been received and enables low latency forwarding.
   Drawback: some congestion conditions cause the cut-through switch to store the entire datagram before acting on it. If a cut-through switch has made a forwarding decision to send out to a particular port P while that port P is busy by transmitting datagrams coming in from other interfaces, the switch needs to buffer the packet on which it has already made a forwarding decision. In this case, the datagram is not forwarded immediately. The cut-through switching technique processes then the datagrams as the slow store-and-forward switching technique.

Other approaches in use:
- Queue management algorithms that controls the packet forwarding in order to handle priority does not have information on the latency required by a packet or application and they can do wrong assumptions when computing the tradeoff between throughput and latency.
- A latency signal and state would enable a congestion control algorithm to set an appropriate send rate and provide capability of low latency transport. However, unreliability of delay measurement and signaling delay prevents to target a zero buffer caused latency.
- In all the case, the loss signal arises only once the buffers have been filled and can lead to excessive delay in case of bufferbloat.
- Wireless access is specifically challenging for latency. Even AQM/RED does not work well because of uncoordinated buffers at layers 2 and 3. Thus a cross-layer flow control with QoS support is key to reduce latency (note that link channels for delay-sensitive traffic should not use ARQ but FEC).

Compared to what exists so far, the proposed solution prevents congestion or contention and then enables to keep advantage of the cut-through switching technique.

A result of the invention is the suppression of buffering for latency reduction.

Of course buffering is needed to achieve de-synchronization of the different elements on the network path and buffering was one the key of the success of Internet architecture. At the first glance, suppressing buffering would require synchronization between emitters and receivers.

Buffering cannot be avoided by methods previously described when 2 or more packets need to be forwarded by the same output interface in the same period of time. In this case, the output interface needs to buffer the coming packets, even in the case of packet prioritization. The invention aims at avoiding any buffering, including buffering at output interface.

The main assumption of this invention is that packets belonging to a stream that correspond to a delay sensitive service can be transmitted periodically on the network. This is for example the case for voice, for video with CBR coding and this can be a requirement for CoMP and many others.

More generally, the invention applies to packets or datagrams belonging to a coherent emission from a source on the network.

The key concept is to use the information about periodicity of the packets that will be received in such a way that the receiver can reserve forwarding resources at the right time with few signaling.

The network equipment uses the periodicity value as the key for switching the datagrams that are received, instead of, or complementary to destination address or label. As long as the periodicity value has a lifetime long enough the network equipment has access to the key for switching before the datagram reception. Then it reserves the resources between input and output interfaces without waiting for address or label reception, deserialization and decoding (this is specifically interesting for optical routers).

Relying on this feature, a router schedules such packets on the output interface before receiving them. This new feature is called "Periodic Forwarding" (PF).

The periodic forwarding is based on a very basic synchronization which is realigned at each received packet.

Many embodiments are specified. The following describes different features that can be used not exclusively from each other.

### 1. Identification

Packets are tagged as "Periodic" by the sender. For example a new IP Differentiated Service "Periodic Forwarding" is used to tag IP packets.

### 2. Resources reservation only

The new queue manager reserves a slot for transmission before the arrival of the datagram, based on the information of periodicity. When the datagram arrives, the resources (transmission path into the network equipment) are available with no delay. The non PF datagram that needs to be sent to the output interface are buffered and transmitted as usual with buffering if needed (Figure 2).

The figure 2 depicts how the PF can be managed by routers. Consider a packet P that has been identified as belonging to a stream with periodic packets. The packet P would be sent by the output interface I. Exploiting the periodic nature of packet P, the router manages the output queue for I such that an empty slot is available when P arrives. It can then be sent by the interface I without any decoding or copy.

More generally the packets or datagrams belonging to a coherent emission can be exploited by the invention.

### 3. Forwarding decision in parallel

The datagram is memorized and in parallel transmitted as soon as it arrives, using the resources that are available thanks to the previous embodiment. At the same time the header, destination address and checksum are checked.

In case of error, i.e. the output interface based on this check does not match the output interface that is used for transmission (the one that has been reserved based on the periodicity):
- the end of the datagram is jammed before end of transmission in order for the receiver to discard the incoming datagram,
- the memorized datagram is sent toward the right addressee.

This embodiment can be done at layer 3 (with IP address in a router) or layer 2 (e.g. Ethernet address in a switch)

### 4. Transparent periodic forwarding

Same as embodiment #3 for Layer 2 but the MAC header is prepared and sent before datagram arrival. The MAC header transmission ends when the data transmission starts. This is similar to enhanced cut-through technique and this relies on the fact that the FCS/CRC is not computed for these datagrams.

### 5. Fragmentation and aggregation are managed to keep periodicity of the source datagram.

### 6. Synchronization

Time arrival of periodic packets may lightly vary: periodic packets may arrive later or earlier than expected.

Scheduler manages a temporal sliding window or time guard for the time a packet has to be sent. The expected packet can be sent on the output interface at any time within this sliding window.

The size and time of this sliding window varies in time and depends on the sharpness of the periodicity, the priority granted to the expected packet, the load on the output interface.

### 7. Congestion management

Periodic packets may have to be sent on an output interface that has no more periodic time-slot available. Several strategies can be applied:
- The "periodic" tag of such packets is removed before forwarding them (for example the "Periodic Forwarding" DiffServ tag is replaced by the "Expedited Forwarding" DiffServ tag). As such, the next routers will not try to manage the packet as a periodic one.
- Some periodic packets are periodically discarded to share the time-slot between many senders.
- The time-slot duration is split into 2 time-slots which are then shared between 2 senders. A part of the periodic packets is discarded. Note: it is assumed that video is coded with a technique enabling data partitioning (for example H.264).

### 8. Periodic scheduling initialization

Periodic packets may have to be sent on an output interface whereas periodicity is unknown.

In this case, several strategies can be applied:
- The periodic packets are discarded.
- The "periodic" tag of such packets is removed before forwarding them (for example the "Periodic Forwarding" DiffServ tag is replaced by the "Expedited Forwarding" DiffServ tag).

Input interface tracks periodicity of packets tagged "periodic", looking for the template of their periodicity.

In another embodiment of the method of the invention, in reference to figure 2, reserving (6) an interface of a node of a communication network is made for the date (7), before the date (7) arises, then forwarding the given datagram (5) is made via the reserved interface, when the date arises.

In another embodiment of the method of the invention, it is performed freeing of an interface of the node when the date arises, then forwarding the given datagram via the freed interface, when the date arises.

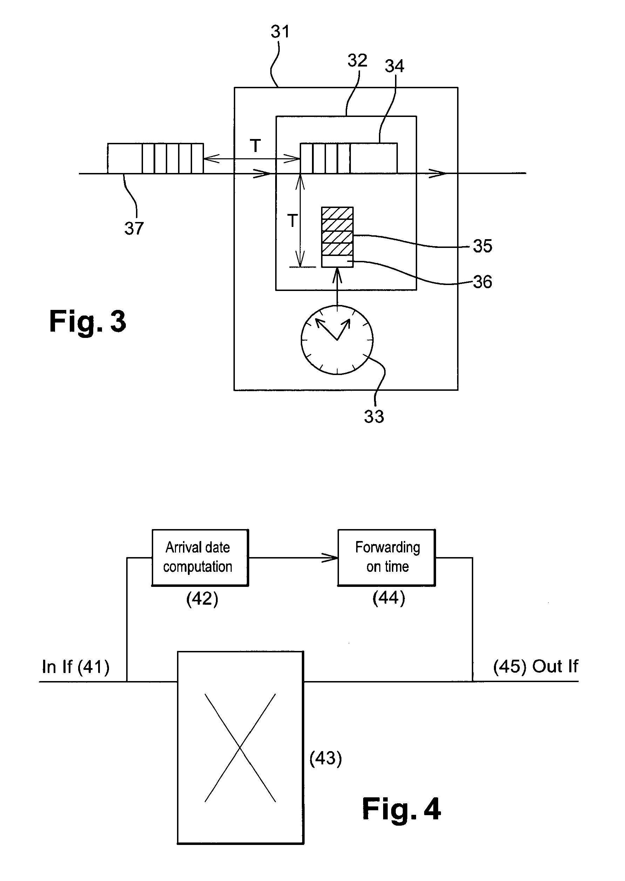

In another embodiment of an apparatus according to the invention and in reference to figure 3, a node (31) contains an interface (32) and a processor (33) for computing a first date of arrival of a present datagram (34) from a source, in the interface (32) and for inserting in a buffer (35) a vacant position (36) for a future datagram (37) expected from the same source within a time delay T corresponding also to the arrival of the vacant slot to a position for immediate transmission by the buffer (35).

In another embodiment of an apparatus according to the invention, in reference to figure 4, a node contains an input interface (41) to which is connected a processor (42) configured for computing the arrival date of datagrams, the processor (42) being connected to a mean (44) for reserving before a date arises the output interface (45) that receives the datagrams through the switch fabric (43).

The invention is susceptible of industrial application in communication networks to avoid congestion and contention in equipments or nodes of such networks and reduce the latency of them.

## Claims

1. Node for a packet switched communication network comprising an interface to forward a datagram belonging to a coherent emission from a source, when a date arises, and a processor configured to compute the date according to the date of arrival of the datagram from the source, before the arrival of the datagram.

2. Node according to claim 1 in which the interface is a circuit.

3. Node according to claim 1 in which the interface is a memory.

4. Node according to claim 1 in which the interface is a processing unit.

5. Method, in a node for a packet switched communication network, to forward a given datagram (5), belonging to a coherent emission from a source, when a date (7) arises, comprising the following steps:
- reserving (6) an interface of the node for the date (7), before the date (7) arises,
- forwarding the given datagram (5) via the reserved interface, when the date arises.

6. Method, in a node for a packet switched communication network, to forward a given datagram belonging to a coherent emission from a source, when a date arises, comprising the following steps:
- freeing an interface of the node when the date arises,
- forwarding the given datagram via the freed interface, when the date arises.

7. Method according to claim 5 comprising a step of detection of a coherent emission of datagrams, from the source.

8. Method according to claim 7 in which the step of detection of a coherent emission of datagrams from the source is a step of detection of a periodical emission of datagrams from the source.

9. Method according to claim 7 in which the step of detection of a coherent emission of datagrams from the source is a step of detection of an emission of tagged datagrams from the source.

10. Method according to claim 5 in which reserving is performed in response to detection, by the node, of a coherent emission of datagrams, from the source.

11. Method according to claim 5 in which the forwarding is performed with a deterministic latency.

12. Method according to claim 11 in which the deterministic latency is equal to the latency of the not loaded node.

13. Method according to claim 5 in which the given datagram is memorized and in parallel forwarded via the interface.

14. Method according to claim 5 in which a header is prepared for the given datagram, said header is sent before the date, and said header is followed by the given datagram.

15. Method according to claim 5 in which fragmentation and aggregation in the node are managed to maintain the emission as a coherent emission.

16. Method according to claim 5 in which the interface is reserved for the date with an additional time guard, around the date.

17. Method according to claim 5 to avoid congestion or contention via said interface, when the date arises.

18. Method according to claim 5 to avoid latency via said interface, when the date arises.

19. Method according to claim 5 to avoid latency between an emitter and a receiver of a packet switched communication network.
